# EUROPEAN PATENT SPECIFICATION

(11) **EP 1 938 628 B1**
(45) Date of publication and mention of the grant of the patent: **15.02.2012**
(21) Application number: 06815839.3
(22) Date of filing: 29.09.2006
(51) Int. Cl.: H04W 8/12

(54) **ANTI-INBOUND TRAFFIC REDIRECTION SYSTEM**
ANTI-INBOUND-VERKEHRSUMLENKSYSTEM
SYSTEME D'OPPOSITION AU REACHEMINEMENT DU TRAFIC ENTRANT

(30) Priority: 30.09.2005 US 722268 P
(43) Date of publication of application: 02.07.2008
(73) Proprietor: Roamware, Inc., San Jose, CA 95128 (US)
(72) Inventor: JIANG, John, Yue Jun, Danville, CA 94506 (US)
(74) Representative: Wallis, Helen Frances Mary
(86) International application number: PCT/US2006/038139
(87) International publication number: WO 2007/041346

(56) References cited:
- EP-A- 1 463 366
- WO-A-2006/030443
- WO-A-2006/110833
- US-A- 6 058 309
- US-A1- 2004 087 305
- US-A1- 2006 068 778
- US-A1- 2008 020 760

## Description

### Related Applications

This application claims priority to Applicant's co-pending United States Provisional Patent Application No. 60/722,268 filed September 30, 2005, titled "Anti-Inbound Traffic Redirection and Defense Against Inbound Traffic Redirection." This application is also related to Applicant's co-pending United States Patent Application No. 11/374,437 filed March 14, 2006, titled "Anti-Traffic Redirection System," which claims priority to Applicant's co-pending United States Provisional Patent Application No. 60/662,030 filed March 14, 2005, titled "Method and Apparatus for Defense Against Network Traffic Redirection," United States Patent Application No. 11/374,431 being a continuation-in-part of Applicant's co-pending United States Patent Application No. 10/635,804 filed August 5, 2003, titled "Method and System for Cellular Network Traffic Redirection, now United States Patent No. 7,072,651 issued July 4, 2006, which claims priority to Applicant's co-pending United States Provisional Patent Application No. 60/401,362 filed August 5, 2002, titled "Traffic Redirection." This application is also related to Applicant's co-pending United States Patent Application No. 11/402,128 filed April 12, 2006, titled "Inbound Traffic Redirection System," which claims priority to Applicant's co-pending United States Provisional Patent Application No. 60/670,914 filed April 12, 2005, titled "Method and Apparatus for Redirection of Inbound Roamer Traffic,". U.S. Patent Application No. 11/402,128 being a continuation-in-part of Applicant's co-pending United States Patent Application No. 10/635,804, now United States Patent No. 7,072,651. This application is also related to Applicant's co-pending United States Patent Application No. 11/375,577 filed March 15, 2006, titled "Method and Apparatus for Defense Against Defense Against Network Traffic Redirection," which claims priority to Applicant's co-pending United States Provisional Patent Application No. 60/662,028 filed March 15, 2005, titled "Method and Apparatus for Defense Against Defense Against Network Traffic Redirection" and Applicant's co-pending United States Provisional Patent Application No. 60/670,914 filed April 12, 2005, United States Patent Application No. 11/375,577 being a continuation-in-part of Applicant's co-pending United States Patent Application No. 10/635,804, now United States Patent No. 7,072,651. This application is also related to Applicant's co-pending United States Patent Application No. 11/508,194 filed August 23, 2006, titled "Method and System for Cellular Network Traffic Redirection," which is a continuation of Applicant's co-pending United States Patent Application No. 11/374,427 filed March 14, 2006, titled "Method, System and Computer Program Product for Countering Anti-Traffic Redirection," claiming priority to Applicant's co-pending United States Provisional Patent Application No. 60/662,031 filed March 14, 2005, titled "Method and Apparatus for Defense Against Defense Against Network Traffic Redirection," and which is a continuation of Applicant's co-pending United States Patent Application No. 11/374,437, United States Patent Application No. 11/508,194 further claiming priority to Applicant's co-pending United States Patent Application No. 11/375,577, United States Patent Application No. 11/508,194 further claiming priority to Applicant's co-pending United States Patent Application No. 11/402,128, and United States Patent Application No. 11/508,194 further claiming priority to Applicant's co-pending United States Patent Application No. 10/635,804, now U.S. Patent No. 7,072,651.

### BACKGROUND OF THE INVENTION

### Field of the Invention

The present invention generally relates to roaming users in mobile networks. More specifically, the invention relates to steering the traffic of the roaming users.

Common carrier mobile communication systems are deployed by different companies and network operators within almost every country in the world. Many of those network operators offer international roaming to their subscribers traveling abroad, and to travelers visiting their territory and using their foreign mobile telephones. Such an offering enables public mobile network subscribers the ability to use their mobile phones within public mobile networks other than their own, such as those networks present in territories other than those covered by the network to which they normally subscribe.

Over the last few years, revenues to network operators from home subscribers have consistently declined due to increased competition and resulting pricing pressures. On the other hand, revenues from roamers have consistently grown in the same period due to increased mobile penetration in local markets and an increase in travel. Various network operators have preferred bilateral roaming agreements ("partnerships") with each other that include more favorable roaming charges than non-partnership operators. Therefore, "preferred" visited networks are those that the home network prefers its outbound roamers to register with, when traveling outside their home coverage area. Non-partner networks are "non-preferred".

Network operators can maximize their margins and roamers can get more attractive roaming rates, as well as better services, if roamers roam on their home mobile operator's preferred (or partner) networks. When the subscribers roam into visited networks from a Home Public Mobile Network (HPMN), they may roam onto one, two or more Visiting Public Mobile Networks(VPMNs), one at a time, based on various criteria. These VPMNs may also include the "non-preferred" VPMN networks. Hence, protecting the existing roaming revenues and growing them further has become an important priority for network operators worldwide. However, current methods of controlling, as to which network a subscriber registers to when he/she is roaming, have certain disadvantages.

In some cases, when there are more than two competing VPMN operators in a country, some competing and "non-preferred" VPMN networks also deploy a form of inbound traffic redirection designed to capture or retain the traffic of roaming mobile phone users visiting within their territory of coverage. State of the art inbound traffic redirection systems are designed primarily to stop this lucrative roaming traffic from "leaking" out of their network to other VPMN operators within the same visited territory.

A previous Inbound Traffic Redirection (ITR) United States Patent application by the present inventor (U.S. Patent Application Number 11/402,128 ("'128 Application")), teaches a solution to retain the inbound roamers who had previously registered with a competing VPMN operator, and were thereafter attempting to re-register with other VPMN operators. In some cases, HPMN operators also assist in the ITR attempts of the competitor VPMN networks, by performing traffic redirection against the other VPMN operators. This leads to decrease in revenues for the other VPMN operators.

Another previous United States Patent Application by the present inventor (U.S. Patent Number 11/375,577 ("'577 Application)), teaches an Anti-inbound traffic redirection solution wherein an HPMN operator, in addition to possibly performing any traffic redirection against non-preferred VPMN operators, could also counter inbound redirection attempts of non-preferred VPMN operators. However, virtually no HPMN operator has currently deployed such an anti-ITR mechanisms against a non-preferred VPMN running an ITR apparatus.

International Application WO2006/030443 has entered the European phase under number EP1792513 and is prior art under Article 54(3) EPC and discloses blocking of redirection attempts by a home network when a mobile unit roams in a visited network.

While known in state-of-the-art steering of roaming technology are methods by which HPMN's can counteract attempts by non-preferred VPMNs to conduct inbound traffic redirection, VPMNs themselves still remain defenseless against competing VPMNs in their same coverage area practicing inbound traffic redirection. Namely, even VPMNs who have preferred bilateral roaming agreements with desired HPMNs, and even when those HPMNs practice state-of-the-art outbound traffic redirection techniques to push outbound roaming traffic to that preferred VPMN, competing VPMNs with no such agreements, and without the benefit of home-network-side traffic redirection still are able to retain and even capture inbound roaming traffic which by agreement and home-network technological measures was intended for the preferred VPMN.

So there is a need in the art for systems and methods by which one VPMN can counteract inbound traffic redirection technological measures deployed by competing VPMN operators.

### BRIEF DESCRIPTION OF DRAWINGS

In the drawings, the same or similar reference numbers identify similar elements or acts.
FIG. 1 represents a system for countering an inbound traffic redirection (ITR) attempt for an inbound roaming mobile station initiated by a first Visiting Public Mobile Network (VPMN), in a monitoring mode, in accordance with an embodiment of the invention;
FIG. 2 represents a system for countering an inbound traffic redirection (ITR) attempt for the inbound roaming mobile station initiated by the first VPMN, in in-signaling path mode, in accordance with an embodiment of the invention;
FIG. 3 represents a flow diagram for implementing Anti Inbound Traffic redirection (Anti-ITR) at a second VPMN, to counter ITR attempt initiated by the first VPMN, in accordance with an embodiment of the invention; and
FIG. 4 represents a flowchart for a method for countering the ITR attempt for the inbound roaming mobile station initiated by the first VPMN, in accordance with an embodiment of the invention.

### SUMMARY

The present invention provides a method for countering an inbound traffic redirection (ITR) attempt for an inbound roaming mobile station, initiated by a first Visiting Public Mobile Network (VPMN). The method includes observing receipt of one or more registration response messages at a second VPMN from an HPMN of the inbound roaming mobile station, during an ongoing inbound roaming mobile station registration attempt between the second VPMN and the HPMN. The method further includes recognizing the ITR attempt by comparing a known registration response message with the one or more registration response messages received. Thereafter, the method includes thwarting the detected ITR attempt, by sending one or more location update (LU) messages from the second VPMN, in response to at least one registration response message, wherein a Calling Party Address of a Signal Connection Control Part, SCCP, of each LU message is configured to be either that of a Virtual Location Register / Virtual Mobile Switching Centre, VLR/VMSC, or an Anti-ITR module in the second VPMN.

In another embodiment, the present invention further provides a system for countering inbound traffic redirection (ITR) attempt for an inbound roaming mobile station initiated by the first VPMN. The system includes an anti-ITR module comprising: a TR probe for detecting the ITR attempt by tracking receipt of one or more registration response messages, at a second VPMN from an HPMN of the inbound roaming mobile station, during an ongoing inbound roaming mobile station registration attempt between the second VPMN and the HPMN and by identifying the ITR attempt by comparing a known registration response message with the received one or more registration response messages, wherein the known registration response message may be used by the HPMN for traffic redirection. The system further includes a countering unit for thwarting the ITR attempt, by sending one or more location update (LU) messages from the second VPMN, in response to at least one registration response message received from a switch wherein a Calling Party Address of a Signal Connection Control Part, SCCP, of each LU message is configured to be either that of a Virtual Location Register / Virtual Mobile Switching Centre, VLR/VMSC in the second VPMN or the Anti-ITR module.

Further aspects of the invention are set out in the following clauses:
1. A method for countering an inbound traffic redirection (ITR) attempt for an inbound roaming mobile station, wherein the ITR attempt is initiated by a first Visiting Public Mobile Network (VPMN), the method comprising:
   detecting the ITR attempt by observing receipt of one or more registration response messages at a second VPMN from an HPMN of the inbound roaming mobile station during an ongoing location update transaction of the inbound roaming mobile station between the second VPMN and the HPMN; and
   thwarting the detected ITR attempt.
2. The method of clause 1, wherein detecting the ITR attempt comprises monitoring passively the receipt of the one or more registration response messages at the second VPMN from the HPMN.
3. The method of clause 1, wherein thwarting the ITR attempt comprises sending one or more location update (LU) messages from the second VPMN in response to least one registration response message.
4. The method of clause 3, wherein the LU messages are sent to the HPMN more than a pre-defined number of time.
5. The method of clause 3, wherein the LU messages are sent to the HPMN after a configurable interval of time.
6. The method of clause 1, wherein the registration response messages is a cancel location message, a MAP abort message, or an TCAP abort message.
7. The method of clause 1, wherein detecting the ITR attempt comprises actively monitoring from the HPMN the receipt of the one or more registration response messages at the second VPMN.
8. The method of clause 7, wherein actively monitoring comprises failing the one or more registration response messages at the second VPMN until the number of one or more registration response messages received is less than an expected number.
9. The method of clause 1 further comprising generating one or more reports indicating at least one of signaling load overhead, redirection success, redirection failure, and percentage of redirected traffic.
10. The method of clause 1, further comprising abandoning the thwarting of ITR attempt if the HPMN satisfies pre-defined criteria.
11. A method for countering an inbound traffic redirection (ITR) attempt for an inbound roaming mobile station, wherein the ITR attempt is initiated by a first Visiting Public Mobile Network (VPMN), the method comprising:
   tracking the receipt of one or more registration response messages at a second VPMN from an HPMN of the inbound roaming mobile station, during an ongoing location update transaction of the inbound roaming mobile station between the second VPMN and the HPMN;
   identifying the ITR attempt by comparing a known registration response message with the received one or more registration response messages, wherein the known registration response message may be used by the HPMN for traffic redirection; and
   thwarting the identified ITR attempt.
12. The method of clause 11, wherein identifying comprises recognizing that the ITR attempt is in progress if the known registration response message is different from the received one or more registration response messages.
13. The method of clause 11, wherein tracking the receipt comprises monitoring passively the receipt of the one or more registration response messages at the second VPMN from the HPMN.
14. The method of clause 11, wherein tracking the receipt comprises monitoring actively the receipt of the one or more registration response messages at the second VPMN from the HPMN.
15. The method of clause 14, wherein monitoring actively comprises failing the one or more registration response messages at the second VPMN until the number of one or more registration response messages received is less than an expected number.
16. A system for countering an inbound traffic redirection (ITR) attempt for an inbound roaming mobile station, wherein the ITR attempt is initiated by a first Visiting Public Mobile Network (VPMN), the system comprising:
   a TR probe for detecting the ITR attempt by observing receipt of one or more registration response messages at a second VPMN from an HPMN of the inbound roaming mobile station during an ongoing location update transaction of the inbound roaming mobile station between the second VPMN and the HPMN; and
   countering unit for thwarting the ITR attempt by sending one or more location update (LU) messages from the second VPMN in response to at least one registration response message received from a switch.
17. The system of clause 16, wherein the first VPMN, the second VPMN, and the HPMN are one of a GSM network, a GPRS network, a 3G network, a CDMA network, a WCDMA network, a WiFi network, and a WiMax network.
18. The system of clause 16, wherein the TR probe is integrated with the countering unit.
19. The system of clause 16, wherein in a passive monitoring mode, the TR probe detects one of a MAP abort, a TCAP abort and a cancel location message as one or more registration response messages received at the second VPMN.
20. The system of clause 16, wherein in active monitoring mode, the TR probe receives one of a MAP abort, a TCAP abort and a cancel location message as one or more registration response messages from the switch.
21. The system of clause 16, wherein in active monitoring mode the switch is a roaming STP configured to assist in exchange of the one or more registration response messages and the one or more LU messages between the HPMN and the second VPMN.
22. The system of clause 16, wherein in active monitoring mode, the countering unit holds the one or more registration response messages until the number of one or more registration response messages is less than an expected number.
23. The system of clause 16, wherein the countering unit sends the LU messages to the HPMN after configurable interval of time.
24. The system of clause 16, wherein the countering unit sends the LU messages to the HPMN more than a pre-defined number.
25. The system of clause 16, wherein the countering unit generates one or more reports indicating at least one of signaling load overhead, redirection success, redirection failure, and percentage of redirected traffic.
26. The system of clause 16, wherein the countering unit abandons the thwarting of ITR attempt if the HPMN satisfies pre-defined criteria.
27. A computer program product comprising a computer useable medium including a computer usable program code for countering an inbound traffic redirection (ITR) attempt for an inbound roaming mobile station, wherein the ITR attempt is initiated by a first Visiting Public Mobile Network (VPMN), the computer program product comprising:
   computer usable program code for detecting the ITR attempt by observing receipt of one or more registration response messages at a second VPMN from an HPMN of the inbound roaming mobile station during an ongoing location update transaction of the inbound roaming mobile station between the second VPMN and the HPMN; and
   computer usable program code for thwarting the detected ITR attempt.
28. The computer program product of clause 27, wherein detecting the ITR attempt comprises monitoring passively the receipt of the one or more registration response messages at the second VPMN from the HPMN.
29. The computer program product of clause 27, wherein thwarting the ITR attempt comprises sending one or more location update (LU) messages from the second VPMN in response to at least one registration response messages.
30. The computer program product of clause 27, wherein detecting the ITR attempt comprises monitoring actively the receipt of the one or more registration response messages at the second VPMN from the HPMN.
31. The computer program product of clause 30, wherein actively monitoring comprises failing the one or more registration response messages at the second VPMN until the number of one or more registration response messages received is less than an expected number.
32. The computer program product of clause 27 further comprising computer usable program code for generating one or more reports indicating at least one of signaling load overhead, redirection success, redirection failure, and percentage of redirected traffic.
33. The computer program product of clause 27 further comprising computer usable program code for abandoning the thwarting of ITR attempt if the HPMN satisfies pre-defined criteria.

### DETAILED DESCRIPTION

The following description provides specific details for a thorough understanding and an enabling description of various embodiments of Anti-Inbound Traffic Redirection System (AITRS) by a VPMN. However, one skilled in the art will understand that the AITRS may be practiced without these details. In other instances, well-known structures and functions have not been shown or described in detail, to avoid unnecessarily obscuring the description of the embodiments of the AITRS. The headings provided herein are for convenience only, and do not affect the scope or meaning of the claimed invention.

### Anti-ITR System -Monitoring Mode

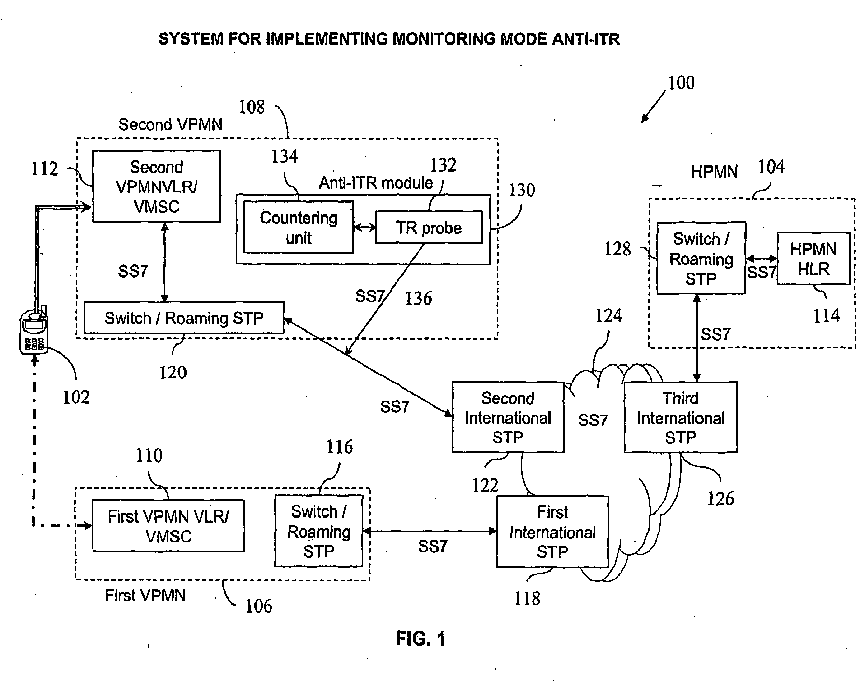

FIG. 1 represents a system 100 for countering inbound traffic redirection (ITR) of an inbound roaming mobile station 102 of a Home Public Mobile Network (HPMN) 104 in a first Visiting Public Mobile Network (VPMN) 106, in a monitoring mode, in accordance with an embodiment of the present invention. The ITR is detected and countered by a second VPMN 108. The inbound roaming mobile station 102 (or a roamer) is initially registered with the first VPMN 106 at a first VPMN VLR 110, (indicated in Fig. 1 with a dotted line). However, while roaming outside the HPMN 104 in some cases inbound roaming mobile station 102 attempts to register with another VPMN operator at a second VPMN VLR 112 in second VPMN 108, (indicated in Fig. 1 with a solid line). In one embodiment of the invention, first VPMN VLR 110 is integrated with a VMSC into first VPMN 106. Further, a second VPMN VLR 112 is integrated with a VMSC into second VPMN 108. Notwithstanding this, both the VPMN VLRs and the VMSCs may have different logical addresses. An HPMN HLR 114 located in HPMN 104 stores subscriber profile data, corresponding to the inbound roaming mobile station 102.

The roaming signaling corresponding to inbound roaming mobile station 102 at the first VPMN 106 is routed between a switch/roaming STP 116 and a first international STP 118. The roaming signaling corresponding to inbound roaming mobile station 102 at the second VPMN 108 is routed between a switch/roaming STP 120 and a second international STP 122. The signaling between HPMN 104 and first VPMN 106, and between HPMN 104 and second VPMN 108 is carried out using SS7 signaling architecture 124, involving a third international STP 126 connected to switching/roaming STP 128 in HPMN 104. The signals exchanged between different networks are TCAP (including MAP, CAP and the like) based signals. In one embodiment of the invention, the signals exchanged are Signaling Connection Control Part (SCCP) based routing signals.

The inbound roaming mobile station 102 attempts to register with second VPMN 108 although it may already be registered with the first VPMN 106 due to one or more of the following reasons. Firstly, the inbound roaming mobile station 102 may attempt to change the VPMN network in case there is weak signal strength or a loss of coverage in first VPMN 106. Secondly, the inbound roaming mobile station 102 may be selecting the second VPMN 108 using an alternative available transmission technology, e.g., GPRS or 3G, in second VPMN 108. When inbound roaming mobile station 102 attempts to register with second VPMN 108, first VPMN 106 may attempt to redirect the traffic of inbound roaming mobile station 102 back to itself. The attempt by a VPMN operator to redirect the traffic of an inbound roamer to its own network is hereinafter referred to interchangeably as Inbound Traffic Redirection (ITR) attempt.

For example, in one such alternative-transmission-means embodiments employing GPRS, instead of monitoring Location Update responses and Cancel Location for VLR, the anti-ITR module is able monitor for Location Update responses and Cancel Location for SGSN. Instead of performing a fake VLR location update in an anti-ITR attempt, it will perform a fake SGSN location update. Some networks might require a send-authentication for a new location update (VLR or SGSN) when swapping between networks. So MAP SAI (Send Authentication Information) might precede or occur concurrently with the fake location update (VLR or SGSN) in an anti-ITR attempt. System 100 includes an Anti-ITR module 130 which passively monitors (i.e. in monitoring mode) the traffic between HPMN 104, and second VPMN 108 and thereby provides one or more messages required to thwart the ITR attempt initiated by first VPMN 106, and hence, redirecting the traffic to second VPMN 108. In one embodiment of the invention, Anti-ITR module 130 is deployed by second VPMN 108 to counter the ITR attempt initiated by the first VPMN 106. The Anti-ITR module 130 includes a Traffic Redirection (TR) probe 132 and a countering unit 134. In one embodiment of the invention, TR probe 132 is integrated with countering unit 134. It will be apparent to a person skilled in the art that different functions of TR probe and countering unit are only for exemplary purposes. Notwithstanding this, any functional property of any of the two (the TR probe and the countering unit) will be hereinafter interchangeably associated with Anti-ITR module 130. In other words, any function which is to be performed by either TR probe 132 and/or countering unit 134 is alternatively capable of being performed by Anti-ITR module 130 alone. In this embodiment of the invention, TR probe 132 monitors/probes the SS7 signals exchanged between switch 120 in second VPMN 108 and second international STP 122 by probing the link as represented by signal flow 136. This is referred to as passive monitoring. The Anti-ITR module 130 sends necessary messages on behalf of second VPMN 108 to thwart the ITR attempt by first VPMN 106.

### Anti-ITR System -In-signaling path mode

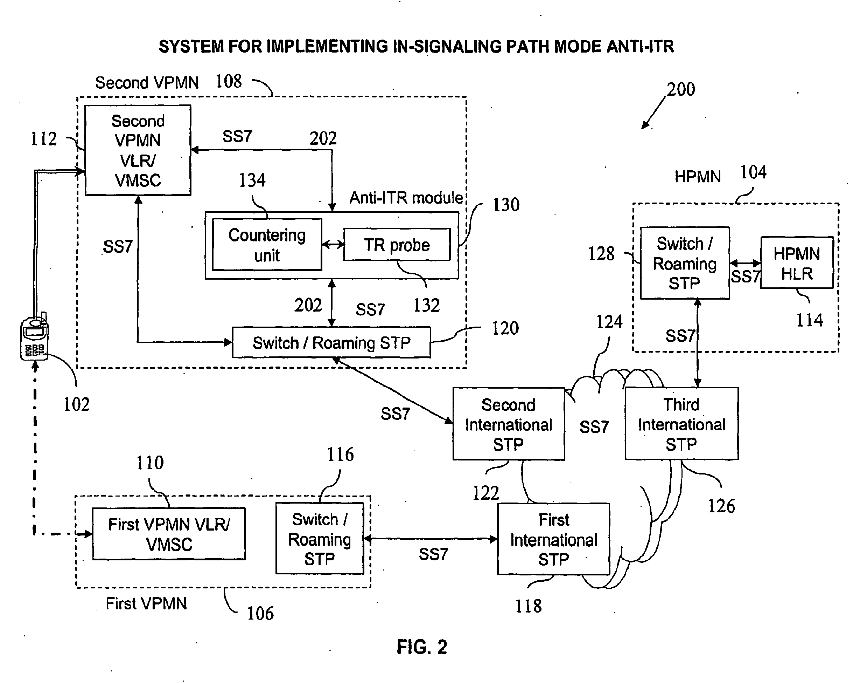

FIG. 2 represents a system 200 for countering an inbound traffic redirection (ITR) attempt for inbound roaming mobile station 102 initiated by first VPMN 106, in in-signaling path mode, in accordance with an embodiment of the invention. The system 200 includes the same elements as described in system 100 in conjunction with Fig. 1. However, the functioning of switch 120 and Anti-ITR module 130 is different in case of the in-signaling path mode. The in-signaling path mode is hereinafter referred interchangeably as active monitoring mode. In the in-signaling path mode, Anti-ITR module 130 is positioned on the signaling path between switch 120 and VMSC/VLR 112. Hence, Anti-ITR module 130 intercepts/receives the SS7 signaling messages exchanged between switch 120 [(or roaming STP) or from the second international STP 122] and VMSC/VLR 112. Signal flow 202 represents this. However, not all SS7 messages are routed through Anti-ITR module 130, hence other SS7 messages which are not considered for implementation of this invention, may be routed through an optional SS7 link between switch 120 and VMSC/VLR 112. Hence, in this case, switch 120 is configured to assist in exchange of one or more registration response messages and one or more Location Update (LU) messages between HPMN 104 and second VPMN 108 at Anti-ITR module 130. These LU messages are used to thwart the ITR attempt initiated by first VPMN 106.

In one embodiment of the invention, all signals exchanged through switch 120 are SCCP/TCAP based signals. Further, since in the in-signaling mode, Anti-ITR module 130 is deployed on roaming SS7 path by configuring switch 120 (or roaming STP) the international roaming SCCP traffic is routed through Anti-ITR module 130. In an exemplary routing, primary routing of the incoming international SCCP traffic from second international STP 122 destined to E164 VPMN VLR 112 is configured to go through Anti-ITR module 130. However, secondary routing is kept to VPMN VLR 112. This is done in order to provide a redundant path for routing of traffic in case of failure of Anti-ITR module 130. Similarly, primary routing of any outgoing international SCCP traffic, destined to E214 address of inbound roaming mobile station 102 from HPMN 104, is configured to go through Anti-ITR module 130. The secondary routing, however, goes to third international STP 126. It will be apparent to a person skilled in the art, that different routing methods using any combination thereof can be used without affecting the working of the system or the method.

The E214 is a numbering plan (NP) used for delivering mobility management related messages in GSM networks. The E.214 number is derived from the IMSI of a roaming mobile station. E.214 numbers are composed of two parts. The first, the E.164 part, is made up of a country code, followed by the network code. The second part of the number comprises of the MSIN part of the IMSI, which identifies an individual subscriber. E.214 numbers are routed separately from E.164 numbers, since they are marked with a different Numbering Plan Indicator (NPI), however, it is possible to reuse Global Title (GT) analysis tables, used in E.164 numbers everywhere except for the final destination network of the message.

### Anti-ITR Routing Using TT

In case where the addresses of VPMN VLR and VMSC are identical, SSN can be used to separate the routing. It will be apparent to a person skilled in the art that alternative routing options are possible, depending upon the type of network elements present in first VPMN 106 and second VPMN 108. For example, to avoid looping the traffic, redirection can be performed either using translation types (or tables) (TT) or by using MTP routing, involving international STP Signal Point Code (SPC) and Switching/Roaming SPC, depending on the network setup in VPMN(s). In another example, an operator in second VPMN 108 could perform MAP analysis and only redirect Cancel Location message from E164 messages, from second international STP 122 through Anti-ITR module 130, to reduce significantly the in-signaling load. Considering the former technique of using the TT, the switch 120 and the Anti-ITR module 130 are configured for both incoming and outgoing international SCCP signaling messages. For example, in case of an incoming message at the switch 120 with TT as 0, Called party (CdPA) is not own and the NP is E.214, Destination Point Code (DPC) is set as Anti-ITR module 130 and the destination TT as 32.

Similarly, in case the CdPA is VPMN VLR 112 and the NP is E.164 with TT as 0, the DPC is set to be Anti-ITR module 130 and the destination TT as 32. This means that any incoming E164 message at the switch 120 is directed to the Anti-ITR module 130 first. In case of an outgoing message from the switch 120, with the TT as 32, CdPA as not own and the NP as E.214, the DPC is set as second international STP 122 and destination TT as 0. Further, in case with TT as 32, CdPA as VPMN VLR 112 and the NP is E164, the DPC is also set to VPMN VLR 112 and destination TT as 0. The routing indicator (RI) of SCCP CdPA in all these cases can remain unchanged [e.g. on Global Title (GT)].

### Anti-ITR Routing Without Using TT

Considering the second technique of using MTP routing, switch 120 is configured to send an incoming message with NP as E.214 and CdPA as not own to DPC at Anti-ITR module 130. Also in case the CdPA is VPMN VLR 112 with NP as E164, the DPC is changed to Anti-ITR module 130. Routing configuration for an own network (i.e. second VPMN 108) destined outgoing message, from Anti-ITR module 130 to the switch 120, sets the DPC to VPMN VLR 112, with RI as SSN / unchanged. Similarly, for an international (HPMN) destined outgoing message from Anti-ITR module 130 to the switch 120, the DPC is set to second international STP 122, with RI remaining as GT. Based on different incoming and outgoing messages from switch 120, the Anti-ITR module 130 sends one or more LU messages to thwart the ITR attempt initiated by the first VPMN 106.

In case none of the above conditions are satisfied, then all incoming SCCP messages may be relayed back either to switch 120 (or the roaming STP), or to VPMN VLR 112, depending on which type of routing is used, the TT type routing or the MTP type routing, respectively. In the methods described above, SCCP is relayed rather than TCAP. However, it will be apparent to a person skilled in the art, that a similar flow can also be defined for a TCAP based relay. In this case, a new transaction will be initiated by Anti-ITR module 130 for each self-initiated fake location update message, and also, each time a new mapping will be established to relate the new originating transaction ID to the original originating transaction ID.

### Location Registration Response Messages in a HPMN TR mechanism

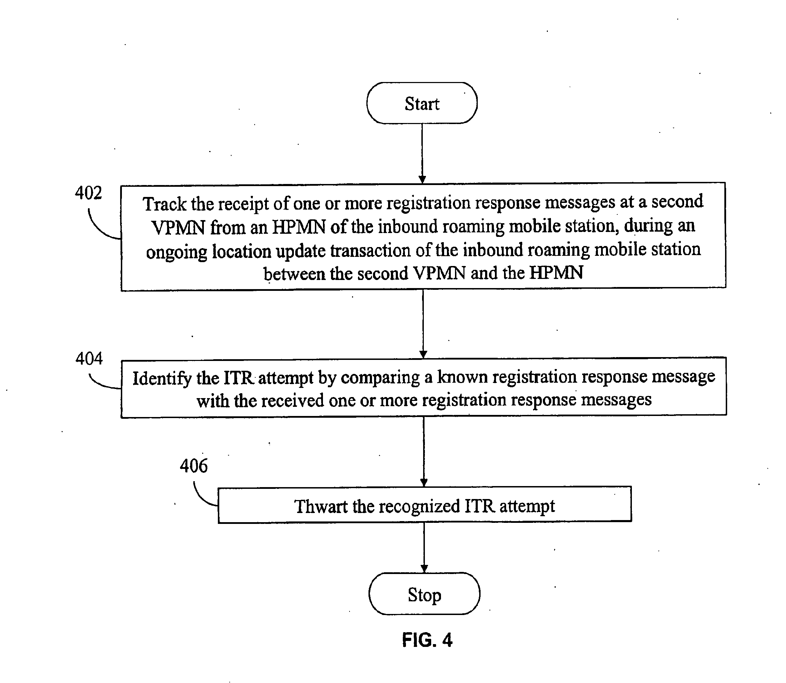

Various embodiments of the present invention are directed towards detecting and countering an ITR attempt by first VPMN 106. These ITR attempts by first VPMN 106 causes HPMN 104 to send certain registration response messages to inbound roaming mobile's 102 registration attempt at second VPMN 108. These registration response messages are different from standard registration response messages used by an HPMN while performing a TR mechanism against a VPMN, that is, these messages are non-standard messages. Further, it is also known that HPMN 104 is not attempting a TR against the second VPMN 108 with these non-standard response messages to redirect inbound roaming mobile station 102 to first VPMN 106. Based on IR 73 guidelines, an HPMN performing a TR against its roaming partner using non-standard registration response messages, must inform the roaming partner, within two days of request for the same. In other words, if the HPMN is using non-standard response messages for registration reject in its TR mechanism on a VPMN, it should inform the VPMN. Hence, if the HPMN 104 is doing TR on the second VPMN 108, it should inform second VPMN 108 as to what registration response messages are being used in its TR mechanism based on the second VPMN's 108 request. Hence, second VPMN 108,prior to countering the ITR attempt, has a prior knowledge of whether or not HPMN 104 is performing a TR against second VPMN 108. Further, details of this embodiment are further explained in conjunction with Fig. 4.

In cases, when an HPMN is performing the TR against the VPMN operator, the HPMN usually uses either a Location Update response error messages or a Cancel Location to an ongoing Location Update with the VPMN. These error messages received in LUP response on the MAP interface are mapped onto equivalent messages on the radio interface according to 3GPP 29010. Table 1 shows a snapshot of the mapping of some of these messages, from MAP interface (29.002) to the radio interface (24.008), with corresponding error codes for each interface. These are examples only and are not intended as being an exhaustive list or as being representative.

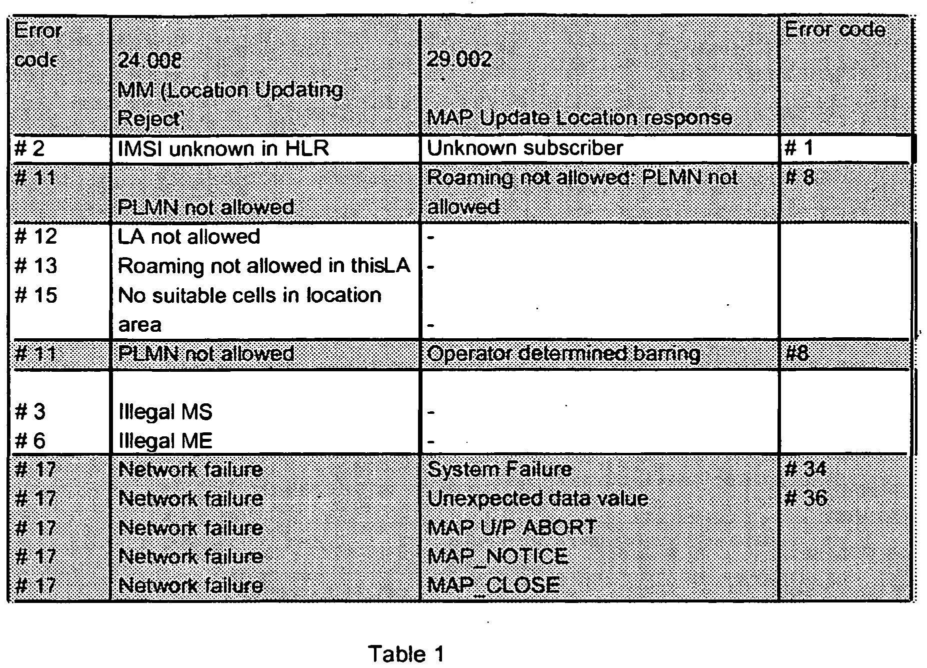

For example, in case, the error in MAP interface is "System Failure" (with error code 34) (29.002), then its equivalent error on the radio interface (24.008), "Network Failure" (error code 17), is received at inbound roaming mobile station 102. Thereafter, inbound roaming mobile station 102 waits for around 15 to 20 seconds, before trying again up to 4 times, before trying alternative networks, if present, and if not, it tries the same network again. Similarly, other 24.008 error messages have their equivalent 29.002 error messages.

IR 73 Guideline on TR defines Unexpected Data Value as standard/recommended registration response error code. However, other error codes such as System Failure, Missing Data, MAP/TCAP abort, MAP-CLOSE etc and Cancel Location response may also be used by the HPMN TR, but are all non-standard response messages in a TR mechanism. Also, according to the guideline, the HPMN using these other error codes as registration response messages in a TR attempt against a VPMN must inform to the VPMN about the same. Moreover, MAP/TCAP abort and Cancel Location are possible registration response messages an HPMN sends to a second VPMN, caused by a first VPMN doing ITR on an inbound roamer attempting to move from the first VPMN to the second VPMN.

### Anti-ITR Signal Flow

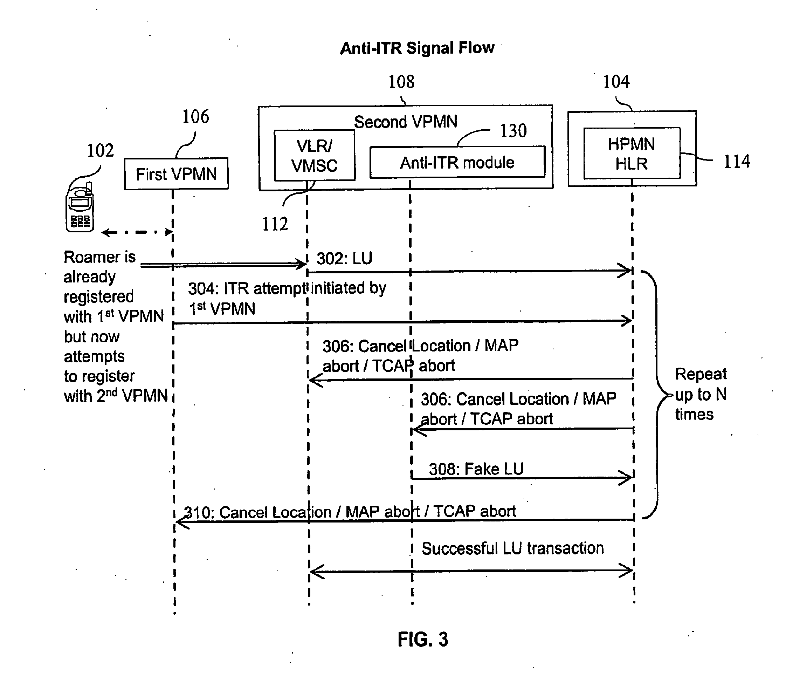

FIG. 3 represents a flow diagram for implementing Anti Inbound Traffic redirection (Anti-ITR) solution at second VPMN 108, to counter the ITR attempt initiated by first VPMN 106, in accordance with an embodiment of the invention. In this embodiment of the invention, anti-ITR module 130 is deployed in second VPMN 108 to detect the ITR attempt. Inbound roaming mobile station 102, already registered with first VPMN 106, attempts to register with second VPMN 108 at VMSC 112 due to one or more of the following reasons. Firstly, the inbound roaming mobile station 102 may attempt to change to second VPMN 108, in case there is weak signal strength or a loss of coverage in first VPMN 106. Secondly, the inbound roaming mobile station 102 may be selecting the second VPMN 108 due to new available technology, e.g., GPRS or 3G, in second VPMN 108. Thereafter, VLR/VMSC 112 in second VPMN 108 sends a Location Update message 302 to HPMN 104, as an attempt to register inbound roaming mobile station 102 with itself. It is also known that HPMN HLR 114 is not attempting TR against second VPMN 108 with those registration response messages that are caused by the ITR attempt by the first VPMN 106. Thereafter, first VPMN 106 initiates an ITR attempt towards itself, i.e., first VPMN 106 initiates an Inbound TR attempt 304 against the second VPMN 108.

The TR probe 132 in Anti-ITR module 130 detects the signaling between HPMN 104 and second VPMN 108 either actively (monitoring mode), or passively (in-signaling mode). TR probe 132 detects the ITR attempt initiated by first VPMN 106, by observing receipt of one or more registration response messages at second VPMN 108 from HPMN 104, during the ongoing location update transaction 302, between second VPMN 108 and HPMN 104. In one embodiment of the invention, TR probe 132 in Anti-ITR module 130 detects a cancel location message 306, or a MAP abort message 306, or a TCAP abort message 306, as one or more registration response messages from HPMN HLR 114 towards VLR/VMSC 112 in second VPMN 108. These MAP abort, TCAP abort or Cancel Location are non-standard registration response messages adopted in a TR mechanism by an HPMN. In another embodiment of the invention, the one or more registration response messages are LU abort messages. In one embodiment of the invention, in passive monitoring mode, one or more registration response messages are directly received at VLR/VMSC 112. The receipt of any of these messages (i.e. MAP/TCAP abort or Cancel Location) confirms the initiation of ITR attempt by first VPMN 106, provided that it is known that the HPMN 104 is also not using these messages for TR against the second VPMN 108.

A roaming mobile station usually sends four LU messages corresponding to a VPMN, before it tries an alternative VPMN. Hence, in order to thwart the ITR attempt, countering unit 134 in Anti-ITR module 130 sends one or more location update (LU) messages, on behalf of second VPMN 108, in response to each registration response message 306 received at second VPMN 108. In one embodiment of the invention, the countering, unit 134 sends one or more fake Location Update (LU) messages 308 to foil the ITR attempt initiated by first VPMN 106. In one embodiment of the invention, in passive monitoring, countering unit 134 sends the fake LU messages 308, on behalf of second VPMN 108, more than a pre-defined number of times. This pre-defined number is selected based on TR method used: either abort location method or cancel location method. In this case, since handset usually tries four times before searching for an alternate network, the pre-defined number is (X-1)*4 times, where X is the number of VPMN networks in the country. This makes the total number of LU messages sent to HPMN 104 equal to five. For each fake LU message 308, HPMN HLR 114 sends a Cancel Location 310, or a MAP abort 310 or a TCAP abort 310 to first VPMN 106. These fake LU messages 308 are continuously sent until a successful location update transaction is recorded at second VPMN 108. Hence, the process of exchange of messages 302 to 310 is repeated up to N number of times. In this way, inbound roaming mobile station's 102 second attempt of location update fools the first VPMN's ITR solution, that the handset is either in manual mode, or is a special handset. Hence, the inbound roaming mobile station 102 is allowed to register with second VPMN 108.

The Calling Party Address (CgPA) of the SCCP part of fake LU message 308 by Anti-ITR module 130 can be configured to be either that of the VLR/VMSC 112 or that of Anti-ITR itself, although MAP level VLR/VMSC will still be the real VLR/VMSC 112. This depends on the configuration of first VPMN's ITR solution with respect to CgPA or VLR/VMSC of a location update message. Moreover, changing the CgPA to the second VPMN's Anti-ITR Global Title (GT) reduces the load to the real VLR/VMSC 112.

In another embodiment of the invention, in active monitoring mode, anti-ITR module 130 checks whether any outgoing SCCP message carries a MAP Location Update (LU) message 302, upon detection of which the SCCP, TCAP parameters and the transaction are recorded. Further, in case the incoming message carries MAP abort 306 or TCAP abort 306 with response to the recorded- transaction 302, or if the incoming message carries Cancel Location 306 on an IMSI of the ongoing recorded transaction, it is examined with the following set of logic procedures. The countering unit 134 holds (or fails) the one or more registration response messages 306 until the number of registration response messages is less than an expected number. In other words, message 306 is dropped by anti-ITR module 130 (i.e. not replayed to VLR 112), if the abort message 306 for inbound roaming mobile station's 102 IMSI of the same originating transaction ID from the same VLR or cancel location message 306 for the same IMSI of the same VLR, is less than a configurable Y number of times (i.e. the expected number). The configurable expected number Y is ((X-1)*4 + 1), where X is configured from a minimum two to the total number of VPMN networks in that country. In this case, since there are two VPMN networks the value of Y is five. Thereafter, for each drop, the anti-ITR module 130 initiates another fake LU message 308, after a configurable interval of time T1 (e.g. T1=0s or T1=50s or T1=300s), on behalf of inbound roaming mobile station's IMSI , using the same parameters (including same VLR., VMSC address, SCCP CgPA and CdPA, although different TCAP transaction Ids might be used) as the first recorded LU message 302. Subsequently, for each fake LU message 308 sent to HPMN 104, the HPMN HLR 114 sends a cancel location 310 to the first VPMN 106. The sequence of exchange of messages 302 to 310 is repeated unit N times. This foils any ITR attempt by first VPMN 106 on inbound roaming mobile station 102.

In case the above conditions are not satisfied, then all incoming SCCP messages may be relayed back to switch 120 or to VPMN VLR 112, depending on whether the TT type is used, or MTP routing is used, respectively. In the above described method, SCCP is relayed rather than TCAP. However, it will be apparent to a person skilled in the art, that a similar flow can also be defined based TCAP relay. In this case, a new transaction will be initiated by Anti-ITR module 130 for each self-initiated fake LU message 308, and also, each time a new mapping will be related the new originating transaction ID to the original originating transaction ID.

### Detecting HPMN TR and countering VPMN ITR attempt

Fig. 4 represents a flowchart for a method for countering an inbound traffic redirection (ITR) attempt for the inbound roaming mobile station, initiated by the first VPMN, in accordance with an embodiment of the invention. The Anti-ITR module 130 in second VPMN 108 may be also applied to counter against TR mechanism initiated by the HPMN, in addition to counter against ITR mechanism by first VPMN 106. In this case, according to method at step 402, receipt of one or more messages 306 at second VPMN 108, is tracked. These one or more messages 306 are sent by HPMN 104, during an ongoing location update transaction of inbound roaming mobile station 102, between second VPMN 108 and HPMN 104. In order to detect whether HPMN 104 is attempting a TR or first VPMN 106 is attempting an ITR, second VPMN at step 404, compares the received one or more registration response message 306 with a known registration response message. The known registration response message is informed to second VPMN 108, as per the IR 73 guidelines, only in case HPMN 104 is attempting the TR against second VPMN 108 using a non-standard registration response message. According to the IR 73 guideline, only-"Unexpected Data Value" (UDV) is a standard registration response message, using which, HPMN 104 need not inform second VPMN that it is performing TR against it. This message itself is a standard indication of HPMN TR. Exemplary non-standard error codes of HPMN TR include, but are not limited to, System Failure, Missing Data, MAP-CLOSE, and MAP-Notice.

However, when any message, other than the standard message (UDV), is received at second VPMN 108, it leads to the comparison at step 404. As explained earlier, if HPMN is using any non-standard registration response message, then it informs second VPMN 108 as the known registration response message, used for comparison at step 404. For example, in case the known registration response message is MAP_Notice, and it is informed by HPMN as a message to be used for HPMN TR, then in accordance with one embodiment of the invention, the Anti-Inbound Traffic Redirection (AITRS) can be integrated with Anti-TR solution (ATRS) of previous filed patent application, which is incorporated in this application in its entirety. The ATRS can counter the HPMN TR against second VPMN. However, if the received registration response message 306 is Cancel Location and the known registration response message is MAP_Notice (as informed by HPMN), then the Cancel Location message is identified as the ITR attempt from first VPMN 106. Further, the first VPMN can only cause the HPMN to generate MAP/TCAP abort or Cancel Location as the non-standard registration response messages. Hence, in case the one or more registration response message is different from the known registration response message, it can be recognized and hence concluded that first VPMN 106 is attempting an ITR against second VPMN 108. Thereafter, at step 406, the identified ITR attempt is thwarted by second VPMN 108. The thwarting includes sending a number of fake LU messages from second VPMN, based on a configurable number of times within a configurable maximum interval for the HPMN. The signal flow is similar to explanation for Fig. 3. However, in this case, Fig. 3 will have the 306 message containing these additional error codes in response to the LU message 302 sent to HPMN.

In one embodiment of the invention, the countering unit 134 abandons the thwarting of the ITR attempt initiated by the first VPMN 106, if an HPMN satisfies pre-defined criteria. In other words, countering unit 134 aborts the Anti-ITR attempt from second VPMN 108, in case an HPMN satisfies the pre-defined criteria based on some application logics. In one embodiment of the invention, the pre-defined criteria may include an HPMN known of performing TR against second VPMN 108, by using a Cancel Location, a MAP abort or a TCAP abort. In another embodiment of the invention, the pre-defined criterion includes a blacklisted HPMN. Any HPMN known to use some fraud control techniques to counter Anti-ITR solution would be blacklisted by second VPMN from further Anti-ITR attempts. In another embodiment of the invention, the second VPMN may periodically check the blacklisted HPMN(s) for any change in its status.

In yet another embodiment of the invention, the Anti-ITR solution may be abandoned based on a configurable distribution profile among HPMN(s) of the inbound roaming mobile station. For example, no more than 20% of ITR attempts initiated by Vodafone™ United Kingdom (UK) would be abandoned by second VPMN for unique inbound roamers. In another embodiment of the invention, the Anti-ITR solution in the second VPMN may stop its thwarting attempt, if it exceeds a configurable threshold number of times of fake location update messages, or exceeds the maximum interval allowed for an anti-ITR attempt. These configurable parameters can be defined per HPMN or across all HPMNs. Other application logics on the HPMN can also be applied to stop an anti-ITR attempt, for example, instead of using a fixed configured threshold number of fake location updates, the logic can use a random generated number to avoid HPMN detection.

In one embodiment of the invention, based on these deductions and subsequent success or failure of the Anti-ITR solution, countering unit 134 generates one or more reports indicating one or more, but not limited to, signaling load overhead, redirection success, redirection failure and percentage of redirected traffic.

The present invention can take the form of an entirely hardware embodiment, an entirely software embodiment or an embodiment containing both hardware and software elements. In accordance with an embodiment of the present invention, the invention is implemented in software, which includes but is not limited to firmware, resident software, microcode, etc.

Furthermore, the invention can take the form of a computer program product accessible from a computer-usable or computer-readable medium providing program code for use by or in connection with a computer or any instruction execution system. For the purposes of this description, a computer-usable or computer readable medium can be any apparatus that can contain, store, communicate, propagate, or transport the program for use by or in connection with the instruction execution system, apparatus, or device.

The medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk - read only memory (CDROM), compact disk - read/write (CD-R/W) and Digital Versatile Disk (DVD).

A computer usable medium provided herein includes computer usable program code, which when executed counters the ITR for an inbound roaming mobile station by detecting a TR attempt initiated by the first VPMN. The ITR attempt is detected by observing receipt of one or more registration response messages at a second VPMN from the HPMN during an ongoing location update transaction of the inbound roaming mobile station between the second VPMN and the HPMN. The computer usable medium further includes computer usable program code for thwarting the detected ITR attempt.

The Anti-Inbound Traffic Redirection System (AITRS) can be used by a VPMN operator against those competing VPMN operators who have deployed an Inbound Traffic Redirection (ITR) solution against them. It can also be used to cache roaming profiles of successfully registered inbound roamers so to avoid subsequent traffic redirections by competing VPMN operators who have deployed inbound traffic redirection against the VPMN operator. This helps stop the leaking of inbound roaming traffic to competing operators doing inbound traffic redirection. The detection and subsequent counter of the ITR attempt can help the VPMN operator prepare business impact and rescue actions.

The components of AITRS described above include any combination of computing components and devices operating together. The components of the AITRS can also be components or subsystems within a larger computer system or network. The AITRS components can also be coupled with any number of other components (not shown), for example other buses, controllers, memory devices, and data input/output devices, in any number of combinations. In addition any number or combination of other processor based components may be carrying out the functions of the AITRS.

It should be noted that the various components disclosed herein may be described using computer aided design tools and/or expressed (or represented), as data and/or instructions embodied in various computer-readable media, in terms of their behavioral, register transfer, logic component, transistor, layout geometries, and/or other characteristics. Computer-readable media in which such formatted data and/or instructions may be embodied include, but are not limited to, non-volatile storage media in various forms (e.g., optical, magnetic or semiconductor storage media) and carrier waves that may be used to transfer such formatted data and/or instructions through wireless, optical, or wired signaling media or any combination thereof.

Unless the context clearly requires otherwise, throughout the description and the claims, the words "comprise," "comprising," and the like are to be construed in an inclusive sense as opposed to an exclusive or exhaustive sense; that is to say, in a sense of "including, but not limited to." Words using the singular or plural number also include the plural or singular number respectively. Additionally, the words "herein," "hereunder," "above," "below," and words of similar import refer to this application as a whole and not to any particular portions of this application. When the word "or" is used in reference to a list of two or more items, that word covers all of the following interpretations of the word: any of the items in the list, all of the items in the list and any combination of the items in the list.

The above description of illustrated embodiments of the AITRS is not intended to be exhaustive or to limit the AITRS to the precise form disclosed. While specific embodiments of, and examples for, the AITRS are described herein for illustrative purposes, various equivalent modifications are possible within the scope of the AITRS, as those skilled in the art will recognize. The teachings of the AITRS provided herein can be applied to other processing systems and methods. They may not be limited to the systems and methods described above.

The elements and acts of the various embodiments described above can be combined to provide further embodiments. These and other changes can be made to the AITRS in light of the above detailed description.

### Other Variations

Provided above for the edification of those of ordinary skill in the art, and not as a limitation on the scope of the invention, are detailed illustrations of a scheme by which one VPMN can counteract an ITR attempt on an inbound roaming mobile station initiated by another VPMN. Numerous variations and modifications will of course occur to those of ordinary skill in the art in view of the embodiments that have been disclosed. For example the present invention is implemented primarily from the point of view of GSM mobile networks as described in the embodiments. However, the present invention may also be effectively implemented on GPRS, 3G, CDMA, WCDMA, WiMax etc., or any other network of common carrier telecommunications in which end users are normally configured to operate within a "home" network to which they normally subscribe, but have the capability of also operating on other neighboring networks, which may even be across international borders.

The examples under the present invention Anti-Inbound Traffic Redirection System (AITRS) detailed in the illustrative examples contained herein are described using terms and constructs drawn largely from GSM mobile telephony infrastructure. But use of these examples should not be interpreted as limiting the invention to those media. Anti-Inbound Traffic Redirection System - a method for countering ITR attempt for the inbound roaming mobile station initiated by the first VPMN in a manner that is agnostic to the capabilities of the visited or non-accustomed network can be of use and provided through any type of telecommunications medium, including without limitation: (i) any mobile telephony network including without limitation GSM, 3GSM, 3G, CDMA, WCDMA or GPRS, satellite phones or other mobile telephone networks or systems; (ii) any so-called WiFi apparatus normally used in a home or subscribed network, but also configured for use on a visited or non-home or non-accustomed network, including apparatus not dedicated to telecommunications such as personal computers, Palm-type or Windows Mobile devices,; (iii) an entertainment console platform such as Sony Playstation, PSP or other apparatus that are capable of sending and receiving telecommunications over home or non-home networks, or even (iv) fixed-line devices made for receiving communications, but capable of deployment in numerous locations while preserving a persistent subscriber id such as the eye2eye devices from Dlink; or telecommunications equipment meant for voice over IP communications such as those provided by Vonage or Packet8.

In describing certain embodiments of the AITRS under the present invention, this specification follows the path of a telecommunications call from a calling party to a called party. For the avoidance of doubt, that call can be for a normal voice call, in which the subscriber telecommunications equipment is also capable of visual, audiovisual or motion-picture display. Alternatively, those devices or calls can be for text, video, pictures or other communicated data.

In the foregoing specification, specific embodiments of the present invention have been described. However, one of ordinary skill in the art will appreciate that various modifications and changes can be made without departing from the scope of the present invention as set forth in the claims below. Accordingly, the specification and figures are to be regarded in an illustrative rather than a restrictive sense, and all such modifications are intended to be included within the scope of present invention. The benefits, advantages, solutions to problems, and any element(s) that may cause any benefit, advantage, or solution to occur or become more pronounced are not to be construed as a critical, required, or essential features or elements of any or all the claims.

### Technical references

Q71X SCCP
Q70X MTP
Q77X TCAP
GSM 1111 SIM and Mobile Interface
GSM 1114 SIM Toolkit
IR 7320 Steering of Roaming

GSM 360 GPRS
GSM 960 GPRS Tunneling Protocol
GSM 23060 GPRS
GSM 29060 GPRS Tunneling Protocol

GSM 902 on MAP specification
Digital cellular telecommunications system (Phase 2+)
Mobile Application Part (MAP) Specification
(3GPP TS 09.02 version 7.9.0 Release 1998)

GSM 340 on SMS
Digital cellular telecommunications system (Phase 2+);
Technical realization of the Short Message Service (SMS);
(GSM 03.40 version 7.4.0 Release 1998)

GSM 348 Security and OTA,
GSM 31048 Security and OTA,
GSM 23119 Gateway Location Register,
GSM 408 Mobile Radio Interface Network Layer
GSM 23122 Mobile Station Procedure
GSM 24008 Mobile Radio Interface Network Layer
GSM22011 Service Accessibility
GSM25304 Idle Mode Selection
GSM29010 Error Network Mapping
GSM 29002 MAP Protocol
GSM 23012 Location Update

### APPENDIX

| **Acronym** | **Description** |
|---|---|
| 3G | Third generation of mobile |
| BSC | Base Station Controller |
| BCSM | Basic Call State Model |
| CAMEL | Customized Application for Mobile Enhanced Logic |
| CDMA | Code Division Multiplexed Access |
| CLI | Calling Line Identification |
| CgPA | Calling Party Address |
| CdPA | Called Party Address |
| CAP | Camel Application Part |
| CC | Country Code |
| CB | Call Barring |
| CSI | Camel Subscription Information |
| DPC | Destination Point Code |
| GMSC | Gateway MSC |
| GPRS | General Packet Radio System |
| GLR | Gateway Location Register |
| GSM | Global System for Mobile |
| GSM SSF | GSM Service Switching Function |
| GT | Global Title |
| HLR-H | HLR from HPMN |
| HLR | Home Location Register |
| HPMN | Home Public Mobile Network |
| IMSI | International Mobile Subscriber Identity |
| IN | Intelligent Network |
| ISG | International Signal Gateway |
| INAP | Intelligent Network Application Part |
| ISD | MAP Insert Subscriber Data |
| IAM | Initial Address Message |
| IDP | Initial DP IN/CAP message |
| ITR | Inbound Traffic Redirection |
| ISUP | ISDN User Part |
| LU | Location Update |
| LUP | MAP Location Update |
| MAP | Mobile Application Part |
| MCC | Mobile Country Code |
| MCC | Mobile Country Code |
| ME | Mobile Equipment |
| MNC | Mobile Network Code |
| MO | Mobile Originated |
| MSC | Mobile Switching Center |
| MSISDN | Mobile Subscriber ISDN Number |
| MSRN | Mobile Subscriber Roaming Number |
| MT | Mobile Terminated |
| MTP | Message Transfer Part |
| NP | Numbering Plan |
| NPI | Numbering Plan Indicator |
| NDC | National Dialing Code |
| ODB | Operator Determined Barring |
| OTA | Over The Air |
| O-CSI | Originating CAMEL Subscription Information |
| PRN | Provide Roaming Number |
| RNA | Roaming Not Allowed |
| RR | Roaming Restricted due to unsupported feature |
| RI | Routing Indicator |
| SPC | Signal Point Code |
| SRI | Send Routing Information |
| SCCP | Signal Connection Control part |
| STP | Signal Transfer Point |
| STP-H | HPMN STP |
| SRI-SM | Send Routing Information For Short Message |
| SSP | Service Switch Point |
| SSN | Sub System Number |
| SIM | Subscriber Identify Module |
| STK | SIM Tool Kit Application |
| SM-RP-UI | Short Message Relay Protocol User Information |
| STP | Signal Transfer Point |
| SS | Supplementary Services |
| TR | Traffic Redirection |
| T-CSI | Terminating CAMEL Service Information |
| TCAP | Transaction Capabilities Application Part |
| TP | SMS Transport Protocol |
| UDHI | User Data Header Indicator |
| UDH | User Data Header |
| UD | User Data |
| VAS | Value Added Service |
| VLR - V | VLR from VPMN |
| VLR | Visited Location Register |
| VMSC | Visited Mobile Switching Center |
| VPMN | Visited Public Mobile Network |

## Claims

1. A method for countering an inbound traffic redirection, ITR, attempt for an inbound roaming mobile station (102), wherein the ITR attempt is initiated by a first Visited Public Mobile Network, VPMN, (106) the method comprising:
tracking (402) the receipt of one or more registration response messages at a second VPMN (108) from a Home Public Mobile Network. HPMN, (104) of the inbound roaming mobile station, during an ongoing unbound roaming mobile station registration attempt between the second VPMN and the HPMN;
identifying (404) the ITR attempt by comparing a known registration response message with the received one or more registration response messages, wherein the known registration response message may be used by the HPMN for traffic redirection; and
thwarting (406) the detected ITR attempt by sending one or more location update, LU, messages from the second VPMN in response to at least one registration response message, wherein a Calling Party Address of a Signal Connection Control Part, SCCP, of each LU message is configured to be either that or a Visited Location Register / Visited Mobile Switching Centre, VLR/VMSC. (112) or an Anti-ITR module (130) in the second VPMN.

2. The method of claim 1, wherein the LU messages are sent to the HPMN more than a pre-defined number of times.

3. The method of claim 1, wherein the LU messages are sent to the HPMN after a configurable interval of time.

4. The method of claim 1. wherein the registration response messages is a cancel location message, a MAP abort message, or an TCAP abort message.

5. The method of claim 1 further comprising generating one or more reports Indicating at least one of signaling load overhead, redirection success, redirection fallure, and percentage of redirected traffic.

6. The method of claim 1, further comprising abandoning the thwarting of ITR attempt if the HPMN satisfies pre-defined criteria.

7. The method of claim 1, wherein identifying comprises recognizing that the ITR attempt is in progress if the known registration response message is different from the received one or more registration response messages.

8. The method of claim 1, wherein tracking the receipt comprises monitoring passively the receipt of the one or more registration response messages at the second VPMN from the HPMN.

9. The method of claim 1, wherein tracking the receipt comprises monitoring activity the receipt of the one or more registration response messages at the second VPMN from the HPMN.

10. The method of claim 9, wherein monitoring actively comprises failing the one or more registration response messages at the second VPMN until the number of one or more registration response messages received is less than an expected number.

11. A system for countering an inbound traffic redirection, ITR, attempt for an Inbound roaming mobile station, wherein the ITR attempt is initiated by a first Visited Public Mobile Network, VPMN, the system comprising an anti-ITR module (130) comprising:
a TR probe (132) for detecting the ITR attempt by tracking receipt of one or more registration response messages at a second VPMN (108) from a Home Public Mobile Network, HPMN, (104) of the unbound roaming mobile station during an ongoing inbound roaming mobile station registration attempt between the second VPMN and the HPMN and by identifying the ITR attempt by comparing a known registration response message with the received one or more registration response messages, wherein the known registration response message may be used by the HPMN for traffic redirection; and
a countering unit (134) for thwarting the ITR attempt by sending one or more location update (LU) messages from the second VPMN in response to at least one registration response message received from a switch, wherein a Calling Party Address of a Signal Connection Control Part, SCCP, of each LU message is configured to be either that of a Visited Location Register / Visited Mobile Switching Centre, VLR/VMSC (112) in the second VPMN or the Anti-ITR module (130).

12. The system of claim 11, wherein the first VPMN (106), the second VPMN (108), and the HPMN (104) are one of a GSM network, a GPRS network, a 3G network, a CDMA network, a WCDMA network, a WiFi network, and a WiMax network.

13. The system of claim 11, wherein the TR probe is integrated with the countering unit.

14. The system of claim 11, wherein in active monitoring mode the switch is a roaming STP configured to assist in exchange of the one or more registration response messages and the one or more LU messages between the HPMN and the second VPMN.

15. The system of claim 11, wherein the countering unit sends the LU messages to the HPMN after configurable interval of time.

16. The system of claim 11, wherein the countering unit sends the LU messages to the HPMN more than a pre-defined number.

17. A computer program product comprising a computer useable medium including a computer usable program code for performing the methods of any of claims 1, 5, 6 and 8-10.

## Patentansprüche

1. Verfahren, um einem Versuch der Eingangsverkehrsumlenkung, ITR, entgegenzuwirken, für eine Inbound-Roaming-Mobilstation (102), wobei der ITR-Versuch von einem ersten besuchten öffentlichen Mobilfunknetz, VPMN, (106) gestartet wird, wobei das Verfahren umfasst:
Verfolgen (402) des Empfangs einer oder mehrerer Registrierungsantwortnachrichten bei einem zweiten VPMN (108) aus einem öffentlichen Heim-Mobilfunknetz, HPMN, (104) der Inbound-Roaming-Mobilstation, während eines gerade stattfindenden Registrierungsversuchs einer Inbound-Roaming-Mobilstation zwischen dem zweiten VPMN und dem HPMN;
Identifizieren (404) des ITR-Versuchs durch Vergleichen einer bekannten Registrierungsantwortnachricht mit der empfangenen, einen oder mehreren Registrierungsantwortnachrichten, wobei die bekannte Registrierungsantwortnachricht vom HPMN zur Verkehrsumlenkung benutzt werden kann; und
Verhindern (406) des detektierten ITR-Versuchs durch Senden einer oder mehrerer Ortsaktualisierungs-, LU, Nachrichten aus dem zweiten VPMN in Reaktion auf wenigstens eine Registrierungsantwortnachricht, wobei eine Anruferadresse eines Signalverbindungssteuerteils, SCCP, jeder LU-Nachricht ausgelegt ist, entweder die eines besuchten Ortsregisters / einer besuchten Mobilvermittlungsstelle, VLR/VMSC, (112) oder die eines Anti-ITR-Moduls (130) im zweiten VPMN zu sein.

2. Verfahren gemäß Anspruch 1, wobei die LU-Nachrichten öfter als eine vorgegebene Anzahl zum HPMN geschickt werden.

3. Verfahren gemäß Anspruch 1, wobei die LU-Nachrichten nach einem konfigurierbaren Zeitintervall zum HPMN gesendet werden.

4. Verfahren gemäß Anspruch 1, wobei die Registrierungsantwortnachrichten eine Annulliere-Ortsnachricht, eine MAP-Abbruchnachricht oder eine TCAP-Abbruchnachricht ist.

5. Verfahren gemäß Anspruch 1, welches ferner ein Erzeugen eines oder mehrerer Reports umfasst, die wenigstens eines von: Signalisierungslastmehraufwand; Umlenkungserfolg; Umlenkungsmisserfolg und Prozentsatz umgelenkten Verkehrs umfasst.

6. Verfahren gemäß Anspruch 1, welches ferner ein Aufgeben des Verhinderns des ITR-Versuchs umfasst, falls das HPMN vorgegebene Kriterien erfüllt.

7. Verfahren gemäß Anspruch 1, wobei das Identifizieren ein Erkennen umfasst, dass der ITR-Versuch gerade stattfindet, falls die bekannte Registrierungsantwortnachricht von der empfangenen, einen oder mehreren Registrierungsantwortnachrichten verschieden ist.

8. Verfahren gemäß Anspruch 1, wobei ein Verfolgen des Empfangs ein passives Überwachen der einen oder mehreren Registrierungsantwortnachrichten beim zweiten VPMN aus dem HPMN ist.

9. Verfahren gemäß Anspruch 1, wobei ein Verfolgen des Empfangs ein aktives Überwachen des Empfangs der einen oder mehreren Registrierungsantwortnachrichten beim zweiten VPMN aus dem HPMN umfasst.

10. Verfahren gemäß Anspruch 9, wobei ein aktives Überwachen ein Scheiternlassen der einen oder mehreren Registrierungsantwortnachrichten beim zweiten VPMN umfasst, bis die Anzahl der empfangenen, einen oder mehreren Registrierungsantwortnachrichten kleiner als eine erwartete Anzahl ist.

11. System, um einem Versuch der Eingangsverkehrsumlenkung-, ITR, entgegenzuwirken, für eine Inbound-Roaming-Mobilstation, wobei der ITR-Versuch von einem ersten besuchten öffentlichen Mobilfunknetz, VPMN, gestartet wird, wobei das System ein Anti-ITR-Modul (130) umfasst, welches umfasst:
eine TR-Sonde (132) zum Detektieren des ITR-Versuchs durch Verfolgen eines Empfangs einer oder mehrerer Registrierungsantwortnachrichten bei einem zweiten VPMN (108) aus einem öffentlichen Heim-Mobilfunknetz, HPMN, (104) der Inbound-Roaming-Mobilstation während eines stattfindenden Registrierungsversuchs einer Inbound-Roaming-Mobilstation zwischen dem zweiten VPMN und dem HPMN und durch Identifizieren des ITR-Versuchs durch Vergleichen einer bekannten Registrierungsantwortnachricht mit den empfangenen, einen oder mehreren Registrierungsantwortnachrichten, wobei die bekannte Registrierungsantwortnachricht vom HPMN zur Verkehrsumlenkung benutzt werden kann; und
eine Gegenwirkeinheit (134) zum Verhindern des ITR-Versuchs durch Senden einer oder mehrerer Ortsaktualisierungs- (LU) Nachrichten vom zweiten VPMN in Reaktion auf wenigstens eine von einer Vermittlungsstelle empfangene Registrierungsantwortnachricht, wobei eine Anruferadresse eines Signalverbindungssteuerteils, SCCP, jeder LU-Nachricht ausgelegt ist, entweder die eines besuchten Ortsregisters / einer besuchten Mobilvermittlungsstelle, VLR/VMSC (112) im zweiten VPMN oder die des Anti-ITR-Moduls (130) zu sein.

12. System gemäß Anspruch 11, wobei das erste VPMN (106), das zweite VPMN (108) und das HPMN (104) eines sind aus: ein GPS-Netz, ein GPRS-Netz, ein 3G-Netz, ein WCDMA-Netz, ein WLAN-Netz und ein WiMax-Netz.

13. System gemäß Anspruch 11, wobei die TR-Sonde mit der Gegenwirkeinheit integriert ist.

14. System gemäß Anspruch 11, wobei im aktiven Überwachungsmodus die Vermittlungsstelle ein Roaming-STP ist, der ausgelegt ist, beim Austausch der einen oder mehreren Registrierungsantwortnachrichten und der einen oder mehreren LU-Nachrichten zwischen dem HPMN und dem zweiten VPMN zu unterstützen.

15. System gemäß Anspruch 11, wobei die Gegenwirkeinheit die LU-Nachrichten nach einem konfigurierbaren Zeitintervall zum HPMN sendet.

16. System gemäß Anspruch 11, wobei die Gegenwirkeinheit die LU-Nachrichten zum HPMN öfter als eine vorgegebene Anzahl sendet.

17. Computerprogrammprodukt, umfassend ein computernutzbares Medium, das einen computernutzbaren Programmcode zum Durchführen der Verfahren gemäß einem der Ansprüche 1, 5, 6 und 8-10 umfasst.

## Revendications

1. Procédé d'opposition à une tentative de réacheminement de trafic entrant ITR pour une station mobile itinérante entrante (102), dans lequel la tentative d'ITR est initiée par un premier Réseau Mobile Public Visité VPMN (106), le procédé comprenant les étapes consistant à :
suivre (402) la réception d'un ou plusieurs messages de réponse d'enregistrement dans un second VPMN (108) en provenance d'un Réseau Mobile Public Local HPMN (104) de la station mobile itinérante entrante au cours d'une tentative d'enregistrement de station mobile itinérante entrante en cours entre le second VMPN et le HPMN ;
identifier (404) la tentative d'ITR en comparant un message de réponse d'enregistrement connu aux un ou plusieurs messages de réponse d'enregistrement reçus, dans lequel le message de réponse d'enregistrement connu peut être utilisé par le HPMN pour le réacheminement du trafic ; et
déjouer (406) la tentative d'ITR détectée en envoyant un ou plusieurs messages de mise à jour d'emplacement LU depuis le second VPMN en réponse à au moins un message de réponse d'enregistrement, dans lequel une Adresse d'Abonné Appelant d'une Partie de Commande de Connexion de Signal SCCP de chaque message LU est configurée de manière à être celle d'un Registre d'Emplacement Visité ou d'un Centre de Commutation de Mobile Visité VLR/VMSC (112) ou d'un module anti-ITR (130) dans le second VPMN.

2. Procédé selon la revendication 1, dans lequel les messages LU sont envoyés au HPMN plus qu'un nombre prédéfini de fois.

3. Procédé selon la revendication 1, dans lequel les messages LU sont envoyés au HPMN après un intervalle de temps configurable.

4. Procédé selon la revendication 1, dans lequel les messages de réponse d'enregistrement est un message d'emplacement d'annulation, un message d'abandon de MAP ou un message d'abandon de TCAP.

5. Procédé selon la revendication 1, comprenant par ailleurs la génération d'un ou plusieurs rapports indiquant la signalisation d'au moins une surcharge, le succès d'un réacheminement, la défaillance d'un réacheminement et le pourcentage de trafic réacheminé.

6. Procédé selon la revendication 1, comprenant en outre l'abandon de la tentative d'ITR si le HPMN répond à des critères prédéfinis.

7. Procédé selon la revendication 1, dans lequel l'identification comprend la reconnaissance du fait que la tentative d'ITR est en progrès si le message de réponse d'enregistrement connu est différent du un ou plusieurs messages de réponse d'enregistrement reçus.

8. Procédé selon la revendication 1, dans lequel le suivi de la réception comprend la surveillance passive de la réception du un ou plusieurs messages de réponse d'enregistrement au second VPMN depuis le HPMN.

9. Procédé selon la revendication 1, dans lequel le suivi de la réception comprend la surveillance active de la réception du un ou plusieurs messages de réponse d'enregistrement au second VPMN depuis le HPMN.

10. Procédé selon la revendication 9, dans lequel la surveillance active comprend la défaillance du un ou plusieurs messages de réponse d'enregistrement au second VPMN jusqu'à ce que le nombre du un ou plusieurs messages de réponse d'enregistrement reçus soit inférieur à un nombre attendu.

11. Système d'opposition à une tentative de réacheminement de trafic entrant ITR pour une station mobile itinérante entrante (102), dans lequel la tentative d'ITR est initiée par un premier Réseau Mobile Public Visité VPMN, le système comprenant un module anti-ITR (130), comprenant :
une sonde TR (132) pour détecter la tentative d'ITR en suivant la réception d'un ou plusieurs messages de réponse d'enregistrement dans un second VPMN (108) en provenance d'un Réseau Mobile Public Local HPMN (104) de la station mobile itinérante entrante au cours d'une tentative d'enregistrement de station mobile itinérante entrante en cours entre le second VMPN et le HPMN et en identifiant la tentative d'ITR en comparant un message de réponse d'enregistrement connu aux un ou plusieurs messages de réponse d'enregistrement reçus, dans lequel le message de réponse d'enregistrement connu peut être utilisé par le HPMN pour le réacheminement du trafic ; et
une unité d'opposition (134) pour déjouer la tentative d'ITR en envoyant un ou plusieurs messages de mise à jour d'emplacement (LU) depuis le second VPMN en réponse à au moins un message de réponse d'enregistrement reçu d'un commutateur, dans lequel une Adresse d'Abonné Appelant d'une Partie de Commande de Connexion de Signal SCCP de chaque message LU est configurée de manière à être celle d'un Registre d'Emplacement Visité ou d'un Centre de Commutation de Mobile Visité VLR/VMSC (112) dans le second VPMN ou d'un module anti-ITR (130).

12. Système selon la revendication 11, dans lequel le premier VPMN (106), le second VPMN (108) et le HPMN (104) sont choisis parmi un réseau GMS, un réseau GPRS, un réseau 3G, un réseau CDMA, un réseau WCDMA, un réseau WiFi et un réseau WiMax.

13. Système selon la revendication 11, dans lequel la sonde TR est intégrée à l'unité d'opposition.

14. Système selon la revendication 11, dans lequel, en mode de surveillance active, le commutateur est une STP itinérante configurée pour aider à l'échange du un ou plusieurs messages de réponse d'enregistrement et du un ou plusieurs messages LU entre le HPMN et le second VPMN.

15. Système selon la revendication 11, dans lequel l'unité d'opposition envoie les messages LU au HPMN après un intervalle de temps configurable.

16. Système selon la revendication 11, dans lequel l'unité d'opposition envoie les messages LU au HPMN plus d'un nombre prédéfini.

17. Produit de programme informatique comprenant un support utilisable sur ordinateur comprenant un code de programme utilisable sur ordinateur pour effectuer les procédés de l'une quelconque des revendications 1, 5, 6 et 8-10.
